# EUROPÄISCHE PATENTSCHRIFT

(11) **EP 2 435 247 B1**
(45) Veröffentlichungstag und Bekanntmachung des Hinweises auf die Patenterteilung: **23.10.2013**
(21) Anmeldenummer: 10721771.3
(22) Anmeldetag: 17.05.2010
(51) Int. Cl.: B32B 9/02, B60R 13/02, B32B 38/18, B32B 37/12

(54) **VERFAHREN ZUM HERSTELLEN EINES LEDERDEKORELEMENTS SOWIE LEDERDEKORELEMENT EINES FAHRZEUGTEILS**
METHOD FOR PRODUCING A LEATHER DECORATIVE ELEMENT AND LEATHER DECORATIVE ELEMENT OF AUTOMOTIVE PART
METHODE POUR PRODUIRE UN ELEMENT DECORATIF EN CUIR ET ELEMENT DECORATIF DE PIECE AUTOMOBILE EN CUIR

(30) Priorität: 28.05.2009 DE 102009026537
(43) Veröffentlichungstag der Anmeldung: 04.04.2012
(73) Patentinhaber: Lisa Dräxlmaier GmbH, 84137 Vilsbiburg (DE)
(72) Erfinder: SCHLEMMER, Christian, 84034 Landshut (DE); AICHNER, Rudolf, 84178 Kirchberg (DE)
(74) Vertreter: HOFFMANN EITLE
(86) Internationale Anmeldenummer: PCT/EP2010/056710
(87) Internationale Veröffentlichungsnummer: WO 2010/136348

(56) Entgegenhaltungen:
- FR-A1- 2 240 980
- FR-A1- 2 913 028

## Beschreibung

### Technisches Gebiet

Die Erfindung betrifft ein Verfahren zum Herstellen eines ein flexibles Dekormaterial umfassenden Verbundkörpers, bevorzugt zur Verwendung als Zierteil mit einer sichtbaren Oberfläche, insbesondere in Fahrzeugen und bevorzugt einem Kraftfahrzeug. Ferner betrifft die Erfindung ein Dekorelement eines Fahrzeugteils mit einer sichtbaren Oberfläche.

### Stand der Technik

Zierteile in einem Kraftfahrzeug werden heutzutage üblicherweise mit einer verzierten Oberfläche ausgeführt, mit einem Zierstoff, insbesondere mit Leder bespannt oder mit Zierhölzem oder Aluminiumteilen versehen. Dabei entsteht mehr und mehr der Wunsch, vor allem für Kraftfahrzeuge des gehobenen Preissegments, individualisierte Innenausstattungen zu erzielen. Hierfür ist es notwendig, gegebenenfalls im Fahrzeuginnenraum befindliche Zierteile möglichst individuell ausgestalten zu können, ohne dabei die Herstellungskosten unnötig zu erhöhen.

Eine Schwierigkeit bei der Individualisierung von Zierteilen besteht in einer begrenzten Zahl verfügbarer Werkstoffe und eine weitere in der Begrenzung des Arbeitsaufwands, der zur Herstellung eines solchen Zierteils betrieben werden darf, um die Kosten des Zierteils möglichst gering zu halten.

Die FR 2 913 028 A1 beschreibt ein Verfahren zum Herstellen eines Körpers, wobei eine Mehrzahl von Materialstücken zu einem Materialblock zusammengefügt werden und ein Verbundkörper von dem Materialblock abgetrennt wird. Jedes der Materialstücke weist eine konstante Dicke auf.

### Darstellung der Erfindung

Die Aufgabe der vorliegenden Erfindung besteht darin, ein Verfahren zum Herstellen eines ein flexibles Dekormaterial, bevorzugt Leder umfassenden Verbundkörpers, bevorzugt zur Verwendung als Zierteil mit einer sichtbaren Oberfläche, insbesondere in einem Fahrzeug, besonders bevorzugt einem Kraftfahrzeug bereitzustellen sowie ein Dekorelement eines Fahrzeugteils mit einer sichtbaren Oberfläche zu ermöglichen. Das Verfahren soll dabei auf effiziente Weise eine Individualisierung des Zierteils ermöglichen.

Die Aufgabe wird durch die Gegenstände der Ansprüche 1 und 13 gelöst. Bevorzugte weitere Merkmale der Erfindung werden in den Unteransprüchen definiert.

Unter "Leder" werden in diesem Text einerseits natürliches Leder und andererseits Kunstleder, also synthetisches Leder oder lederähnliche Werkstoffe verstanden. Zu "Leder" zählen in diesem Zusammenhang auch Lederfaserstoffe ("Lefa"), die aus Lederresten der Lederindustrie, Naturiatex (Bindemittel), natürlichen Fetten und Gerbstoffen hergestellt werden, Lederpulverstoffe und Flechtleder. Der ein flexibles Dekormaterial, insbesondere Leder umfassende Verbundkörper kann alternativ zu und/oder neben dem vorstehend definierten Leder auch Elemente aus Textil, Holz, Rinde, Vlies, Filz, Abstandsgewirke, Kunststoff, Papier, Zellulose, Kork, Naturfasern (z.B. Flachs, Sisal), Naturfaserverbundwerkstoffen (z.B. Nafacryl = Naturfaser-Duroplaste), Metall oder ähnlichen Werkstoffen aufweisen.

Die Materialien können vollflächig oder partiell vorbehandelt sein, z.B. beschichtet, gefärbt und/oder gebeizt, wobei das Vorbehandlungsmaterial sowohl oberflächlich aufgebracht als auch in die Tiefe des Materials eingebracht werden kann. Dabei ist es auch möglich, dass ein oder mehrere der zusätzlichen Elemente des Verbundkörpers funktionale Eigenschaften, wie beispielsweise das Leiten von Licht wahrnehmen.

Ein Beispiel eines Zierteils kann in eine Instrumententafel, einen Dachhimmel oder auch eine Airbagabdeckung integriert sein. Bei einer Airbagabdeckung lässt sich der Verbundkörper derart gestalten, dass eine oder mehrere definierte Risskanten vorgesehen sind, um ein fehlerfreies, ungehindertes Auslösen des Airbags zu erlauben. Die Risskanten können durch nachträgliche Schwächung des Verbundkörpers geschaffen werden. Es ist aber auch möglich, die Materialstücke so zu einem Materialblock zu verbinden, dass in dem resultierenden Verbundkörper Schichten mit geringerer Haftung die Risskanten bilden. Dies kann z.B. durch partielle Verklebung oder die Verwendung hierfür besonders geeigneter Klebstoffe erreicht werden.

Neben reinen Zierteilen können auch Funktionselemente, die zumindest in Teilbereichen mit dem Verbundkörper versehen oder auch selbst als Verbundkörper ausgeführt sind, nach dem erfindungsgemäßen Verfahren hergestellt werden. Darüber hinaus lässt sich der Verbundkörper neben PKWs auch in anderen Kraftfahrzeugen, wie etwa Bussen, und in sonstigen Verkehrsmitteln bzw. Fahrzeugen wie Schiffen, Flugzeugen, Zügen und dergleichen einsetzen.

Die unterschiedlichen Materialstücke eignen sich besonders gut für eine Individualisierung des durch das Verfahren erzeugten Zierteils

Die unterschiedlichen Materialstücke können dabei bevorzugt in einer Richtung, die in einer Schnittebene liegt, und alternativ oder besonders bevorzugt zusätzlich in einer Richtung, die nicht in einer Schnittebene liegt, variieren. Hierfür gibt es eine Variation der Dicke einzelner oder mehrerer Materialstücke, insbesondere einzelner oder mehrerer Schichten. Daneben können auch in einer oder mehreren der oben genannten Richtungen Variationen von anderen Parametern der Materialstücke vorgesehen sein, um eine besonders deutliche Individualisierung zu erzeugen.

Das Zusammenfügen der Materialstücke zu dem Materialblock und das Abtrennen eines Verbundkörpers von dem Materialblock erfolgen dabei so, dass ein abgetrennter Verbundkörper bevorzugt eine ebene Schicht bildet oder beispielsweise durch Dehnen oder Strecken in eine ebene Schicht überführt werden kann, die je nach Material auch biegbar ist. "Eben" bedeutet in diesem Fall nicht, dass die Schicht entlang einer planen Ebene verlaufen muss, sondern die Schicht kann auch Krümmungen, Knicke und dergleichen enthalten. Die Form der Schicht hängt dabei insbesondere von der Oberfläche des Zierteils ab. Auch die Dicke des abgetrennten Verbundkörpers kann je nach Anforderung variieren.

Der Materialblock, von dem ein Verbundkörper abgetrennt ist, kann dabei selbst einen Verbundkörper darstellen. D.h. der Verbundkörper kann aus dem Materialblock geschnitten werden, z.B. indem die Kanten bearbeitet (abgetrennt) werden. Dies ist üblicherweise der Fall, wenn der Materialblock mehr als eine Schicht aufweist. Der Materialblock kann dabei weiter bearbeitet werden. Beispielsweise können Funktionselemente wie Licht oder Luft leitende Elemente in Aussparungen eingebracht sowie Perforationen erzeugt und/oder Färbungen und/oder Beschichtungen vorgenommen werden.

Beim Erstellen des Materialblocks ist es möglich, dass eine bestimmte Kontur für den Verbundkörper vorgegeben wird ("Konturlegung"). Die Kontur des Materialblocks ist daher weitgehend frei wählbar und kann für die spätere Verwendung des Verbundkörpers und/oder Materialblocks eingestellt werden. Dabei kann der Materialblock beispielsweise ein halbmondförmiges oder wellenförmiges Hilfsteil nutzen. Darauf können die einzelnen Materialstücke aufgelegt und miteinander verbunden werden. Das Hilfsteil kann dann entfernt werden und der Materialblock weist bereits stabil vorgeformte Verbundschichten auf.

Daneben ist es möglich, die Materialstücke für den Materialblock und/oder den Verbundkörper vor dem Zusammenfügen mit einer Oberflächenkontur zu versehen, so dass Konturen zweier benachbarter Materialstücke wie eine Verzahnung ineinandergreifen können. Dies ermöglicht einerseits neue optische Effekte, andererseits wird die Stabilität des Körpers durch den so realisierten Formschluss verbessert.

Die Erscheinung des Verbundkörpers wird einerseits durch die Anzahl, andererseits auch durch die Größe, Form, Farbe, das Material, die Reihenfolge und die Art des Zusammenfügens der einzelnen Materialstücke des Materialblocks bestimmt. Daneben hängt die Erscheinung des Verbundkörpers auch davon ab, wie der Verbundkörper von dem Materialblock abgetrennt ist.

In einem der einfachsten Beispiele können eine Mehrzahl von flächigen Lederstücken mit ihren Flächen aneinandergeklebt und dadurch ein quaderförmiger Materialblock erstellt werden. Ein Abschneiden einer Fläche entlang einer Schnittebene, die beispielsweise senkrecht zu der Ausdehnung der einzelnen Materialstücke verläuft, führt dann zu einem Verbundkörper, der entsprechend der Anzahl und Reihenfolge der zu dem Materialblock zusammengefügten Materialstücke eine Mehrzahl von Streifen aus Leder aufweist.

Je nach dem, wie die Dicken, Farben oder andere Parameter der Materialstücke variieren, lassen sich durch parallele Schnitte eine Vielzahl weiterer Verbundkörper erstellen, die jeweils voneinander unterschiedlich und somit individualisiert sind. Dieses Verfahren lässt sich selbstverständlich für jede Art des Zusammenfügens von einzelnen Materialstücken zu einem Materialblock anwenden.

Insbesondere ist es auch möglich, dass nicht flächige, sondern beispielsweise kugelförmige oder zufällig geformte Materialstücke durch entsprechende Klebstoffe oder dergleichen zu einem Materialblock zusammengefügt werden, von dem anschließend Verbundkörper abgetrennt werden können.

Erfindungsgemäß wird der Verbundkörper anschließend auf eine sichtbare Oberfläche eines Zierteils aufgebracht, so dass die Oberfläche des Zierteils ein individuelles Aussehen erhält.

Bevorzugt werden die Materialstücke vor dem Zusammenfügen in eine definierte oder zufällige Form gebracht, bevorzugt geschärft, gespalten, schärfgespalten, geschliffen oder gebogen. Die definierten oder zufälligen Formen der Materialstücke können beispielsweise durch verschiedene Dicken, Konturen, Öffnungen, laterale Ausdehnungen und dergleichen erreicht werden. Es ist auch möglich, individuelle Teile, die eine im Wesentlichen zufällige Form aufweisen, direkt, das heißt ohne vorherige Bearbeitung, zu dem Materialblock zusammenzufügen.

Die bevorzugten Verfahren, die Materialstücke vor dem Zusammenfügen in eine definierte oder zufällige Form zu bringen, wurden oben genannt und sollen hiernach kurz erläutert werden:
Unter "Schärfen" wird in dieser Anmeldung das Abtragen eines Teils einer Lederhaut verstanden, welcher der hochwertigeren Seite der Lederhaut gegenüberliegt ("Schlechtseite"). Der abgetrennte Teil der Lederhaut ist dabei im Allgemeinen nicht mehr zusammenhängend, sondern zerfällt in eine Vielzahl von Einzelteilen. Dagegen bezeichnet das "Spalten" ein Teilen einer Lederschicht in zwei durchgehende Lederschichten, von denen eine die höherwertige Seite und die andere die geringerwertige Seite aufweist. Beim "Schärfspalten" wird eine Lederhaut über eine Schablone gelegt, die an definierten Stellen Erhebungen bzw. Senken aufweist. Ein üblicherweise zum Spalten verwendetes Messer wird dann beispielsweise in einem kleinen Abstand über die Lederhaut bewegt. An den Stellen, an denen die Schablone die Lederhaut über den Pfad des Messers hinaus vorstehen lässt, werden teilweise oder vollständig Teile der Lederhaut abgeschnitten. Die abgeschnittenen Teile können dabei wie beim Schärfen in eine Vielzahl von Einzelteilen zerfallen oder wie beim Spalten zusammenhängend bleiben.

Neben dem Schärfen und Schärfspalten lässt sich das Material der Materialstücke für den Materialblock beispielsweise auch durch Laserbearbeitung, Schleifen, Fräsen und Polieren bearbeiten. Zum Schärfspalten bzw. Spalten ermöglicht eine scharfe Klinge in Form eines Bandmessers bevorzugt ein exaktes Abtragsverhalten, das gleichmäßiger als beim Schleifen ist. Auf diese Weise entsteht kein Staub und kein Faserausriss, der beim Schleifen und Fräsen zu befürchten wäre.

Materialstücke, die auf eine der oben genannten Weisen oder auch anders in eine definierte oder zufällige, individuelle Form gebracht und anschließend zu einem Materialblock zusammengefügt werden, ermöglichen eine nahezu unbegrenzte Vielfalt individueller Formen des von dem Materialblock abgetrennten Verbundkörpers. So können ohne Probleme individualisierte Oberflächen eines Zierteils in einem Kraftfahrzeug hergestellt werden, ohne dass hoher Arbeitsaufwand dazu führt, dass diese Zierteile besonders kostenintensiv werden.

In einer bevorzugten Ausführungsform weisen die Materialstücke flächige Schichten einer Dicke von zwischen 0,15 mm und 10,0 mm, bevorzugt zwischen 0,4 mm und 1,4 mm auf. Solche flächigen Schichten lassen sich besonders effizient zu einem Materialblock zusammenfügen, indem sie beispielsweise miteinander verklebt werden. Ein durch diese Schichten erzeugter Materialblock eignet sich zur gleichzeitigen Herstellung einer Vielzahl von Verbundkörpern, so dass er eine besonders effiziente Art der Herstellung eines individuellen Zierteils in einem Kraftfahrzeug ermöglicht.

Bevorzugt werden die Materialstücke flächig aufeinander zusammengefügt. Die Materialstücke können also bevorzugt beispielsweise durch Kleber (z.B. Hotmeltklebstoff, Dispersionsklebstoff, Klebefolie, Klebeweb) entlang ihrer Flächen miteinander verbunden werden.

Daneben gibt es auch andere Möglichkeiten des Verbindens von Materialstücken. Wenn es sich bei den Materialstücken beispielsweise um andere Formen als Schichten einer bestimmten Dicke handelt, sondern beispielsweise um komplexer geformte Stücke, kann auch ein Einschluss eines entsprechenden Materialstücks in eine Umgebung von Klebstoff oder ein Einklemmen eines Materialstücks zwischen zwei umgebenden und beispielsweise durch Kleber miteinander verbundenen Materialstücken erfolgen.

Bevorzugt sind die Materialstücke in drei Dimensionen zufällig geformt. Dies kann bedeuten, dass die Materialstücke, die beispielsweise flächige Schichten sein können, durch Schärfspalten oder dergleichen in ihrer Dicke variieren.

Die Schichten können auch in ihrer lateralen Ausdehnung, das heißt senkrecht zu ihrer Dicke, unterschiedlich groß oder durch entsprechende Formprozesse individualisiert worden sein. Besonders bevorzugt wird, dass die Materialstücke in ihrer lateralen Richtung einheitlich dimensioniert sind, um einen gleichmäßigen Materialblock zu erhalten, senkrecht zur lateralen Ausdehnung aber unterschiedlich dimensioniert sind. Die Schichten können dabei einerseits untereinander verschiedene, aber innerhalb einer Schicht gleiche Dicken aufweisen. Andererseits ist es auch möglich, dass einzeine oder jede der Schichten Teilbereiche mit unterschiedlichen Dicken aufweisen. "Lateral" bezeichnet in diesem Zusammenhang eine Ausdehnung, senkrecht zu welcher unterschiedliche Schichten miteinander zusammengefügt sind.

Die Matenalstücke weisen zumindest bereichsweise voneinander verschiedene Formen, insbesondere verschiedene Dicken auf. Durch eine solche Ausführung der Materialstücke ist ein besonders leicht individualisierbarer Materialblock und damit eine Vielzahl aus dem Materialblock entstehender Verbundkörper möglich.

Einige Möglichkeiten zur Realisierung unterschiedlicher Dicken oder anderer unterschiedlicher Formen wurden vorstehend bereits genannt. Daneben ist es beispielsweise auch möglich, einzeine Materialstücke zusammenzurollen, zu knicken, zu knittem oder auf eine andere Weise in ihrer Form zu verändern.

In einer bevorzugten Ausführungsform umfassen die Materialstücke Funktionsstücke, insbesondere Funktionsschichten, die zwischen benachbarte Materialstücke gefügt werden. Beispiele solcher Funktionsstücke sind transparente Schichten, Polymer, Holz, Kork, Vlies, Textil, Polyester, Polyamid, Polycarbonat, TPE, TPU, Silikon, PVC, PU oder gemischte Stücke.

Beispielsweise im Fall einer transparenten Funktionsschicht kann es möglich sein, Licht in der Funktionsschicht zu leiten und kontrolliert, z.B. auch nur partiell auszustreuen, so dass beispielsweise ein beleuchteter Streifen oder beleuchtete Punkte entlang einer individualisierten Oberfläche möglich ist. Ein Funktionsstück im Sinne der Erfindung ist dabei ein Stück, das mit einer Funktion versehen ist, also einen Effekt erzeugen kann. Dieser Effekt kann aktiv oder auch passiv erzeugt werden oder nur im Zusammenwirken mit einem weiteren Element entstehen. Eine zumindest teilweise lichttransparente Schicht kann beispielsweise durch geeignete Materialien (gitterförmige Materialien, Abstandsgewirke, transparente Polymere etc.) realisiert werden. Daneben kann auch eine nachträgliche Bearbeitung, z.B. durch Laserbehandlung Öffnungen, Perforationen und/oder dergleichen einbringen.

Die lichttransparente Schicht kann gleichzeitig als Gas, insbesondere Luft durchlässige Schicht ausgeführt sein. Dies setzt eine geeignete Materialauswahl und/oder eine nachträgliche Bearbeitung voraus.

Gemäß einem bevorzugten Verfahren werden die Materialstücke durch einen Klebstoff, insbesondere ein Polymer zusammengefügt. Dies stellt eine besonders einfache und sichere Art des Zusammenfügens der Materialstücke dar. Alternativ ist es jedoch auch möglich, die Materialstücke beispielsweise zusammenzuklemmen, miteinander zu verschmelzen oder auf andere Weise miteinander zu verbinden.

In einer bevorzugten Ausführungsform wird durch das Zusammenfügen ein im Wesentlichen quaderförmiger Materialblock erzeugt. Ein solcher im Wesentlichen quaderförmige Materialblock erleichtert das Erstellen von gut weiterzuverarbeitenden Verbundkörpern und trägt somit zur Effizienz des Verfahrens bei. Daneben ist es jedoch auch möglich, den Materialblock in einer anderen Form zu erzeugen. Insbesondere ist es nicht nötig, dass der Materialblock durchgehend oder hauptsächlich rechte Winkel oder geradlinige Kanten aufweist.

In einer besonders bevorzugten Ausführungsform wird das Abtrennen eines oder mehrerer Verbundkörper durch Schneiden entlang einer Fläche, die mehrere der Materialstücke schneidet, durchgeführt. Die Fläche muss dabei keine ebene Fläche sein, sondern kann beispielsweise auch gebogen oder mit scharfen Knicken versehen sein. Die Fläche kann auch eine dreidimensionale Struktur, beispielsweise einen kleineren Materialblock ("Tochterblock") oder ein Relief, das gemäß dem zu bedeckenden Zierteil verläuft, von dem Materialblock abtrennen. Daneben ist es auch möglich, beispielsweise durch Stanzen, Schneide, Sägen oder andere Verfahren eine oder mehrere Verbundkörper aus dem Materialblock abzutrennen.

Es wird bevorzugt, dass dabei die eine oder mehreren Ausrichtung oder Ausrichtungen bzw. die Hauptausrichtung oder Hauptausrichtungen der Fläche, entlang welcher abgetrennt wird, zufällig ausgewählt wird oder werden. Eine zufällige Auswahl der Ausrichtung der Fläche, entlang welcher abgetrennt wird, führt zu einer zusätzlichen Individualisierung der entstehenden Verbundkörper.

Selbst im Fall von mehreren gleichen Materialblöcken aufgrund einer gleichen Zusammenstellung von Materialstücken zu den Materialblöcken kann immer noch durch die Orientierung der Schnittfläche individualisiert werden. Die Ausrichtung der Schnittfläche entscheidet beispielsweise über die Dicke der einzeinen Materialstücke in dem Verbundkörper sowie deren Ausrichtung. Somit lässt sich aus einem Materialblock eine Vielzahl individuell voneinander verschiedener Verbundköper erstellen, ohne dass dies negative Auswirkungen auf die Effizienz des Herstellungsverfahrens hat.

Ein erfindungsgemäßes Dekorelement eines Fahrzeugteils weist eine sichtbare Oberfläche und eine Mehrzahl von zusammengefügten, bevorzugt miteinander verklebten, entlang der Oberfläche nebeneinander angeordneten, unterschiedlichen Materialstücken auf, die Leder umfassen wobei zumindest eines der Materialstücke in seiner Dicke variiert. Ein solches Dekorelement kann insbesondere das Produkt eines vorstehend beschriebenen Verfahrens sein. Die Mehrzahl zusammengefügter und entlang der Oberfläche nebeneinander angeordneter Materialstücke, die Leder umfassen, führt zu der gewünschten Individualisierung des Dekorelements und damit des Fahrzeugs, in dem das Fahrzeugteil verbaut wird.

Die Mehrzahl zusammengefügter Materialstücke kann sich gegenüber verschiedenen Dekorelementen hinsichtlich einer Vielzahl von Parametern unterscheiden. Einerseits ist es möglich, eine Vielzahl verschiedener Materialien oder Farben einzusetzen, andererseits können diese auf eine Vielzahl verschiedener Weisen miteinander verbunden und ausgerichtet sein. Eine besonders effiziente Möglichkeit dies zu erreichen, wird durch das vorstehende Verfahren aufgezeigt.

Mit Vorteil weisen die Materialstücke Streifen einer Dicke von zwischen 0.15 mm und 10,0 mm, bevorzugt zwischen 0,4 mm und 1,4 mm auf. Um eine Individualität auch auf relativ kleinem Raum zu erkennen, ist es vorteilhaft, Streifen der oben genannten Dicke zu verwenden. Alternativ ist es jedoch auch möglich, deutlich kleinere oder auch deutlich größere Streifen zu verwenden. Daneben können auch Materialstücke benutzt werden, die nicht streifenförmig, sondern beispielsweise wie ein Flickenteppich nebeneinander angeordnet sind.

Auch bei einem Materialblock aus einer Mehrzahl von flächigen Materialstücken kann es dazu kommen, dass die Materialstücke im Wesentlichen senkrecht zueinander oder auch zufällig miteinander verbunden werden. Es ist möglich, dass einzelne Materialstücke in einer ersten Orientierung und andere Materialstücke in einer anderen, beispielsweise zur ersten Orientierung senkrechten Orientierung ausgerichtet sind. Es können auch Materialstücke verschiedenster Formen miteinander verbunden werden, um den Materialblock zu bilden.

Insbesondere kann auch zwischen einzelne schichtförmige Materialstücke ein Volumen von nicht schichtförmigen Materialstücken, beispielsweise kleinen Partikeln und dergleichen eingefügt werden.

Bevorzugt umfassen die Materialstücke Funktionsstücke, insbesondere Funktionsstreifen, die zwischen benachbarten Materialstücken angeordnet sind. Für die Funktionsstücke gilt das bereits oben zu den Funktionsstücken Geschriebene analog. Insbesondere transparente Streifen können überraschende Effekte auf dem Dekorelement erzeugen und bieten sich daher für die Gestaltung einer Oberfläche des Dekorelements an.

In einer bevorzugten Ausführungsform sind die Materialstücke durch einen Klebstoff, z.B. Hotmeltklebstoff, Dispersionsklebstoff, Klebefolie, Klebeweb oder ein Polymer zusammengefügt. Der Klebstoff kann zusätzliche Füllstoffe enthalten, um besondere optische Effekte zu erzeugen (z.B. fluoreszierende Klebstoffe, Klebstoffe mit Metallic- oder Perlmutteffekt). Wie bereits oben zum Herstellungsverfahren erläutert, ist es jedoch auch möglich, Materialstücke auf andere Weise miteinander zu verbinden.

Mit Vorteil ist das Dekorelement nach dem vorstehend beschriebenen Verfahren hergestellt.

Der Verbundkörper kann auf ein Formteil vollflächig aufkaschiert, vernäht, verschraubt, verklebt, verrastet oder geklemmt werden. Alternativ ist es möglich, den Verbundkörper nur partiell an dem Formteil zu befestigen, also z.B. nur im Randbereich, ähnlich einem Bezugsstoff bei einem gepolsterten Möbelstück. Auch ist es denkbar, zwischen den Verbundkörper und das Formteil Zwischenschichten einzubringen, mit denen besondere, z.B. haptische Effekte erzeugt werden können.

Der Verbundkörper und/oder der Materialblock können nach ihrer Herstellung weiter bearbeitet werden. Mögliche Bearbeitungsschritte zur Bearbeitung von zumindest Teilbereichen sind z.B. Beschneiden, Ausstanzen oder Ausfräsen von Teilbereichen, evtl. mit nachträglichem Auffüllen der so entstandenen Öffnungen, Schärfen, Spalten, Schärfspalten, Laserbearbeiten, Umformen, Konturlegung zur Anpassung an ein Formteil, Färben, Beizen, Beschichten, Bedrucken, Hinterfüllen, Hinterlegen mit haptisch oder optisch wirkenden Zwischenschichten und/oder Hinterleuchtung. Auch Kombinationen hieraus sind denkbar, beispielsweise zunächst ein partielles Tiefeneinfärben des Verbundkörpers und anschließendes Schärfen zur Erzeugung von besonderen Effekten. Auch die Verwendung des Verbundkörpers zur Herstellung von weiteren Materialblöcken in Verbindung mit unterschiedlichen weiteren Materialien ist möglich.

Die einzelnen Materialstücke des Materialblocks können sich bevorzugt in ihrer Farbe voneinander unterscheiden, dies ist aber nicht unbedingt notwendig. Die Auswahl und Anordnung der Schichten kann hinsichtlich ihrer Farben, Dicken, Geometrien, Materialarten oder Funktionalitäten definiert oder wahllos erfolgen.

Beispielsweise für die Verkleidung eines Lüftungsauslasses wird bevorzugt, dass der Verbundkörper und insbesondere der Materialblock definierte Ausnehmungen aufweist, die nach einem Anbringen des Verbundkörpers auf dem Lüftungsauslass mit den Lüftungsschlitzen des Lüftungsauslasses übereinstimmen. Solche durch Ausnehmungen des Verbundkörpers oder Materialblocks definierte Öffnungen können neben Lüftungsöffnungen auch andere Öffnungen bedecken. Beispiele hierfür sind Lautsprecher, Leuchten oder Sensoren.

Es ist auch möglich, dass einzeine Materialstücke eines Verbundkörpers nach dessen Abtrennen von dem Materialblock bzw. eine oder mehrere der Verbundflächen zwischen benachbarten Materialstücken aufgedehnt werden, so dass eine oder mehrere Öffnungen entstehen. Die Öffnungen können auch dadurch erzeugt werden, dass bei der Herstellung des Materialblocks die einzelnen Materialstücke nur partiell verklebt werden. Derartige Öffnungen können neben ihrer oben beschriebenen Verwendung auch befüllt werden. Hierfür bieten sich insbesondere Polymere, Steine, Glas und Textilien an.

Leder der Materialstücke, des Materialblocks und/oder des Verbundkörpers kann durch ein geeignetes Material hinterfüllt werden. Ein Beispiel eines solchen Materials sind Polymere. Das Polymer zum Hinterfüllen einer Lederstruktur kann lichttransparente Eigenschaften besitzen, so dass es ein entsprechend ausgeführter Verbundkörper erlaubt, besondere optische Effekte zu erzeugen.

Eine Imprägnierung einzelner oder aller Materialstücke kann vor dem Zusammenfügen zu einem Materialblock erfolgen. Andererseits ist es auch möglich, dass der Materialblock als Ganzes oder ein bereits abgetrennter Verbundkörper mit einem Imprägniermittel oder dergleichen versiegelt und gegen äußere Einflüsse geschützt wird. Bevorzugt kann nach dem Abtrennen des Verbundkörpers zusätzlich eine Lackschicht entlang eines definierten Musters auf den Verbundkörper aufgetragen werden. Hierfür eignet sich beispielsweise eine Maskierungsschablone, mittels der die Sichtseite des Verbundkörpers überlackiert werden kann.

Neben Zierteilen im strengen Sinne können durch den erfindungsgemäßen Verbundkörper auch zierende Teile im weitesten Sinne, also beispielsweise Teile der Sitze oder Kopfpolster bedeckt werden.

Es ist auch möglich, dass der Verbundkörper an ausgewählten Stellen, beispielsweise durch Laserbearbeitung, ausgedünnt wird. Ein Anwendungsbeispiel hierfür ist das Erzeugen einer definierten Risslinie bei einer Abdeckung eines Airbags.

Durch den Verbundkörper können auch organische Strukturen dargestellt werden. Unter "organischen Strukturen" ist in diesem Zusammenhang zu verstehen, dass unterschiedliche und unregelmäßige Schichtverbünde vorgesehen sind. Durch unterschiedliche Materialkonsistenz kann es zu unterschiedlichen Materialabtragungen kommen, was zu dem als "organische Struktur" bezeichneten Erscheinungsbild führt. "Organische Strukturen" können auch durch konturiertes und/oder versetztes Schneiden oder Schleifen oder durch den Einsatz von Schablonen erzeugt werden. Unter "organische Struktur" fällt auch der Effekt, der entsteht, wenn ein Verbundkörper in eine Zwangslage gebracht wird, in der beispielsweise Torsionskräfte auf die einzelnen Materialstücke des Verbundkörpers wirken. Ein Beispiel hierfür entsteht bei der Fertigung eines Zierteils mit einem bevorzugten Verbundkörper, bei welcher der Verbundkörper durch die Form des Zierteils in eine Zwangslage gebracht wird. Nach einem Zuschneiden des Verbundkörpers nach dem Anbringen an dem Zierteil stellt sich der Verbundkörper in eine entspannte Situation zurück, so dass ein Kantenverlauf zwischen benachbarten Materialstücken unregelmäßig werden kann. Die Zwangslage kann dabei auch durch eine Schablone erzeugt werden.

Es ist auch möglich, dass der Verbundkörper zu einer "Schnur" geformt wird. Eine solche Schnur kann im Querschnitt verschiedene Geometrien aufweisen. Die Schnur kann dann beispielsweise in eine Teilenut eines Fahrzeugteils eingesteckt werden oder bevorzugt durch ein transparentes Material, eine Beschichtung, eine Folie oder ein Textil umwickelt werden. Das Textil kann dabei auch eine Netzstruktur aufweisen. Die Schnur kann auch eine Dekornaht bilden. Mehrere solcher Schnüre können miteinander vernäht sein.

Der Verbundkörper kann durch Thermoformen verformt werden. Gegebenenfalls ist es hierfür nötig, eine Polymerbeschichtung vor dem Thermoformen auf den Verbundkörper aufzutragen, um das Thermoformen zu begünstigen.

Bevorzugt kann ein Verbundkörper auch rückseitig versiegelt werden, um ein Hinterschäumen, Hintergießen, Hinterspritzen und dergleichen möglich zu machen.

Weitere Vorteile und Merkmale der Erfindung ergeben sich aus der Gesamtheit der Ansprüche sowie der nachfolgenden Figurenbeschreibung.

### Kurze Figurenbeschreibung

- Fig. 1: zeigt einen Materialblock, der aus einer Mehrzahl von Materialstücken zusammengefügt ist;
- Fig. 2: zeigt einen Verbundkörper, der aus dem Materialblock aus Fig. 1 erzeugt wurde;
- Fig. 3: zeigt einen Materialblock aus einer Mehrzahl von definiert geformten Materialstücken;
- Fig. 4: zeigt den Materialblock aus Fig. 1 mit einem individuellen Schnittmuster für einen Verbundkörper;
- Fig. 5: zeigt einen Materialblock aus einer Mehrzahl von definiert geformten Materialstücken und mit Materialeinschlüssen zwischen dem Materialstücken;
- Fig. 6: zeigt einen Materialblock aus einer Mehrzahl undefiniert geformter Materialstücke;
- Fig. 7: zeigt einen Verbundkörper einer weiteren Ausführungsform mit konzentrisch angeordneten, ringförmigen Materialstücken; und
- Fig. 8: zeigt einen Materialblock mit definierten Oberflächenausnehmungen.

### Wege zur Ausführung der Erfindung

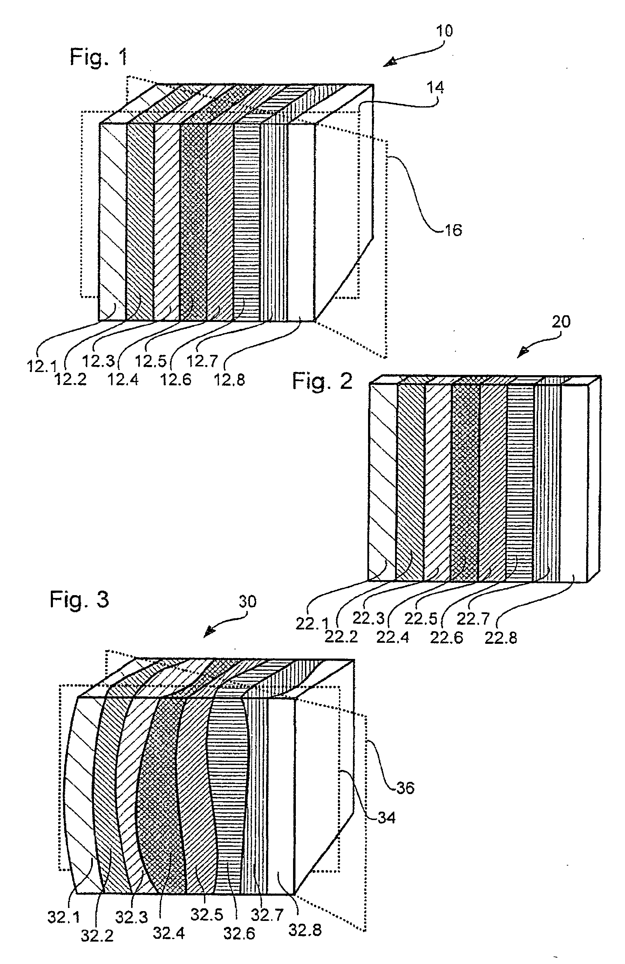

Fig. 1 zeigt einen Materialblock 10 aus einer Mehrzahl von Materialstücken 12.1 bis 12.8. Die Materialstücke 12.1 bis 12.8 sind in der in Fig. 1 gezeigten Ausführungsform Schichten aus Leder, die entlang jeweils benachbarter Oberflächen miteinander verbunden sind. Die Lederschichten 12.1 bis 12.8 sind in der in Fig. 1 gezeigten Ausführungsform durch einen Kleber zusammengefügt.

Die Gestalt des Materialblocks 10 in Fig. 1 ist würfelförmig. Eine würfelförmige Gestalt als Spezialform eines Quaders stellt eine besonders vorteilhafte Form des Materialblocks dar, weil hiervon eine Mehrzahl individueller Verbundkörper mit einer definierten, insbesondere rechteckigen oder quadratischen und zumindest für die Mehrzahl der Verbundkörper gleichen Größe abgetrennt werden können.

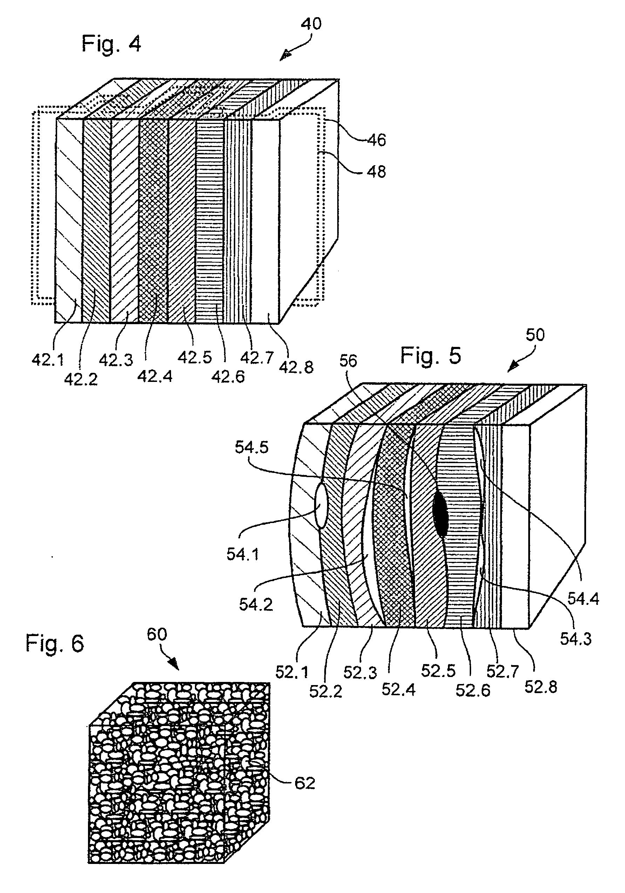

In Fig. 1 sind zwei bevorzugte Schnittebenen 14, 16 angedeutet, entlang derer ein Verbundkörper von dem Materialblock abgetrennt werden kann. Die in dieser Figur gezeigten Schnittebenen sind jedoch lediglich beispielhafter Natur und lassen sich beliebig drehen und auch umformen, wie beispielsweise in der später beschriebenen Fig. 4 gezeigt wird.

Einerseits kann beispielsweise die Art des Zusammenfügens im Sinne einer Reihenfolge und Materialauswahl der Materialstücke, andererseits auch die Orientierung und Form der Schnittebene, entlang der einer oder mehrere Verbundkörper von dem Materialblock abgetrennt werden, variiert werden. So ist es möglich, aus einer Vielzahl verschiedener Materialstücke mehrere Verbundkörper zu erzeugen, die jeweils voneinander unterschiedlich sind. Daneben können auch mehrere Verbundkörper als Produkte desselben Materialblocks untereinander gleich, jedoch von Produkten anderer Materialblöcke abweichend strukturiert sind.

Dadurch lässt sich eine besonders effiziente Herstellung von individuellen bzw. quasi individuellen Verbundkörpern herstellen, die eine Oberfläche in einem Kraftfahrzeug zieren können.

Fig. 2 zeigt einen Verbundkörper 20, der aus dem Materialblock 10 aus Fig. 1 durch ein Schneiden entlang der Schnittebene 14 in Fig. 1 erzeugt wurde. Der Verbundkörper 20 umfasst eine Mehrzahl von Materialstücken 22.1 bis 22.8, die den Materialstücken 12.1 bis 12.8 aus Fig. 1 entsprechen. Durch das Schneiden entlang der Schnittebene 14 in Fig. 1 wurde aus den Materialstücken 12.1 bis 12.8, die jeweils Ebenen aus Leder sind, eine entsprechende Zusammenstellung von einzelnen Streifen 22.1 bis 22.8 aus dem Material der Lederschichten 12.1 bis 12.8 des Materialblocks erzeugt.

Ein Schnitt entlang der Schnittebene 16 in Fig. 1 hätte einen entsprechend anderen Verbundkörper zur Folge. Fig. 3 zeigt eine andere Ausführungsform eines Materialblocks 30. Der Materialblock 30 in Fig. 3 ähnelt dem Materialblock 10 aus Fig. 1, insofern im Wesentlichen schichtförmige Materialstücke 32.1 bis 32.8 miteinander zu dem Materialblock 30 verbunden sind. Auch die Schichten 32.1 bis 32.8 des Materialblocks 30 sind in der hier gezeigten Ausführungsform miteinander verklebt.

Im Gegensatz zur Ausführungsform aus Fig. 1 sind die Materialschichten 32.1. bis 32.8 jedoch zumindest teilweise insbesondere durch Schärfspalten bearbeitet. Dies führt dazu, dass sich die Dicken der Schichten 32.1 bis 32.8 lokal voneinander derart unterscheiden, dass das regelmäßige Muster des Verbundkörpers 20 aus Fig. 2, der aus dem Materialblock 10 aus Fig. 1 erzeugt worden ist, verändert wird. Ein entsprechend abgetrennter Verbundkörper von Materialblock 30 hätte keine parallelen, gerade nebeneinander liegenden Streifen, sondern entsprechend der Schichtdicke der Materialstücke 32.1 bis 32.8 konturierte Streifen.

In der in Fig. 3 gezeigten Ausführungsform entsteht eine zusätzliche Individualisierung der Verbundkörper durch die lokale Dickenvariation der Materialstücke 32.1 bis 32.8. Die Dicke kann dabei für jedes Materialstück einer Dickenveränderung, insbesondere einer kontinuierlichen Dickenveränderung oder einer Dickenveränderung mit und ohne Diskontinuitäten unterworfen sein.

Neben der Individualisierung durch die Strukturierung der einzelnen Materialstücke lässt sich in der in Fig. 3 gezeigten Ausführungsform selbstverständlich auch eine weitere Individualisierung einzelner Verbundkörper durch die Wahl der Schnittebene erzeugen, wobei in Fig. 3 zwei Beispiele einer Schnittebene 34, 36 gezeigt sind, die den Schnittebenen 14, 16 in Fig. 1 entsprechen.

Darüber hinaus sind die Materialstücke 32.1 bis 32.8 nicht nur entlang einer Richtung in der Schnittebene 34 variiert, sondern weisen auch senkrecht dazu variierende Konturen auf. Somit wird es möglich, für eine Vielzahl von Schnitten entlang der Schnittebene 34 bzw. einer hierzu parallelen Ebene jeweils individuelle Verbundkörper zu erzeugen.

Fig. 4 zeigt einen Materialblock 40, der dem Materialblock 10 aus Fig. 1 gleicht. Der Materialblock 40 ist aus einer Mehrzahl verschiedener Materialstücke 42.1 bis 42.8 zusammengesetzt, wobei die Materialstücke 42.1. bis 42.8 analog zur Ausführungsform aus Fig. 1 durch flächige Elemente, insbesondere durch Schichtelemente, die bevorzugt aus Leder gefertigt sind, gebildet sind.

Fig. 4 zeigt eine Paarung von Schnittebenen 46, 48, die sich durch den Materialblock 40 entlang einer individuellen Kontur erstrecken. Die Schnittebenen 46, 48 verlaufen dabei nicht durchgehend planar, sondern konturiert durch den Materialblock 40. Dies kann einerseits eine besonders effiziente Bildung einer Oberflächenverzierung eines Zierteils in einem Kraftfahrzeug ermöglichen, wenn die Oberfläche des Zierteils beispielsweise dem Verlauf der Schnittebenen 46, 48 entspricht. Andererseits ermöglicht eine individuelle und insbesondere zufällige Führung der Schnittlinien 46, 48, die bevorzugt parallel zueinander verlaufen, um einen Verbundkörper gleichmäßiger Dicke zu erzeugen, eine weitere Individualisierung des Verbundkörpers.

Der ausgeschnittene Verbundkörper muss sich nämlich nicht seiner Form nach der Schnittebene, entlang der er ausgeschnitten wurde, richten, sondern kann auch auf eine Ebene gespannt werden.

Die Materialstücke 42.1 bis 42.8 entsprechen den Materialstücken 12.1 bis 12.8 des Materialblocks 10 aus Fig. 1. Fig. 5 zeigt eine weitere Ausführungsform eines Materialblocks 50. Der Materialblock 50 umfasst eine Mehrzahl miteinander verbundener Materialstücke 52.1 bis 52.8. Die Materialstücke 52.1 bis 52.8 sind ähnlich der in Fig. 3 gezeigten Ausführungsform in ihrer Dicke, insbesondere durch Schärfen, Spalten oder bevorzugt durch Schärfspalten bearbeitet.

Im Unterschied zur in Fig. 3 gezeigten Ausführungsform sind die Materialstücke 52.1 bis 52.8 jedoch nicht mit einander gegenüberliegenden Flächen plan aufeinander angebracht, z. B. verklebt. Im Gegensatz hierzu weist der Materialblock 50 in Fig. 5 beispielsweise Ausnehmungen 54.1 bis 54.5 auf, in denen ein Füllstoff eingebracht sein kann. Als Füllmaterial kann in dieser Ausführungsform bevorzugt ein transparentes Polymer, wie z. B. Polyester, Polyamid, Polycarbonat, Polyurethan, TPU, TPE, Silikon, Klebstoff oder Gemische eingebracht sein. Derartige transparente Füllungen von Ausnehmungen zwischen benachbarten Materialstücken 52.1 bis 52.8 ermöglichen, dass der Verbundkörper, der aus dem Materialblock 50 abgetrennt wird, funktionale Eigenschaften wahmehmen kann. Die Einbringungen können dann beispielsweise als Lichtleiter fungieren, die zu einer Beleuchtung der Oberfläche des Zierteils beitragen. Daneben ist jedoch beispielsweise auch möglich, dass über die Licht leitenden Einbringungen beispielsweise Sensoren für Umgebungslicht und dergleichen mit der Oberfläche des Zierteils verbunden sind.

Alternativ ist es auch möglich, statt der Einbringungen 54.1 bis 54.5 Öffnungen zwischen benachbarten Schichten des Materialblocks 50 und damit zwischen benachbarten Streifen des Verbundkörpers freizuhalten, um beispielsweise Lüftungsschlitze und dergleichen integral mit der Oberfläche des Zierteils zu ermöglichen. Für den Fall einer in den Verbundkörper integrierten Luftführung empfiehlt es sich, die Oberflächen der Luft führenden Bereiche zu imprägnieren bzw. zu verstärken, um eine Formstabilität zu erreichen. Hierfür können auch Hohlprofile (z.B. Schläuche aus Gummi, Silikon Thermoplasten oder Duroplasten) in den Verbundkörper eingearbeitet werden. Zwischen zwei der Materialstücke 52.5, 52.6 ist eine Ausnehmung 56 mit einem anderen Material versehen und in den Materialblock eingeklebt. Bei der Einbringung 56 kann es sich beispielsweise um Holz, Kork, Vlies, Textil, Polymere oder dergleichen handeln. Derartige Elemente können als zusätzliches Individualisierungselement oder auch als funktionales Element verwendet werden. Beispielsweise ist es möglich, dass in der Ausnehmung ein Drucktaster, ein Sensor oder dergleichen eingebracht ist. Eine Ausnehmung zwischen benachbarten Materialstücken 52.1 bis 52.8 kann auch frei bleiben, um beispielsweise den Blick auf ein unterhalb des Verbundkörpers vorgesehenes Element frei zu lassen. Es kann in diesem Zusammenhang auch notwendig sein, ein auf dem mit dem Verbundkörper zu bedeckenden Teil der Oberfläche des Zierteils befindliches Element, beispielsweise einen Schalter, durch die Fläche des Verbundkörpers passieren zu lassen.

Die Einbringung von transparenten Elementen oder auch anderen funktionalen Elementen in den Materialblock bzw. den Verbundkörper sowie das Vorsehen von Ausnehmungen in dem Verbundkörper lässt sich grundsätzlich auf jede der hier gezeigten Ausführungsformen anwenden.

Fig. 6 zeigt eine andere Ausführungsform eines Materialblocks 60. Der Materialblock 60 ist in der in Fig. 6 gezeigten Ausführungsform aus einer Vielzahl undefiniert strukturierter Materialstücke 62 zusammengesetzt. Bei den Materialstücken 62 kann es sich beispielsweise um kleine, undefiniert geformte Materialstücke handeln, die beispielsweise durch Kleber zu einem Materialblock zusammengefügt werden können. Insbesondere können die Materialstücke auch Reste, beispielsweise Verschnitt von Leder oder dergleichen sein.

Der Materialblock 60 lässt sich grundsätzlich genauso wie die oben beschriebenen Materialblöcke bearbeiten, um einen individualisierten Verbundkörper zu erzeugen.

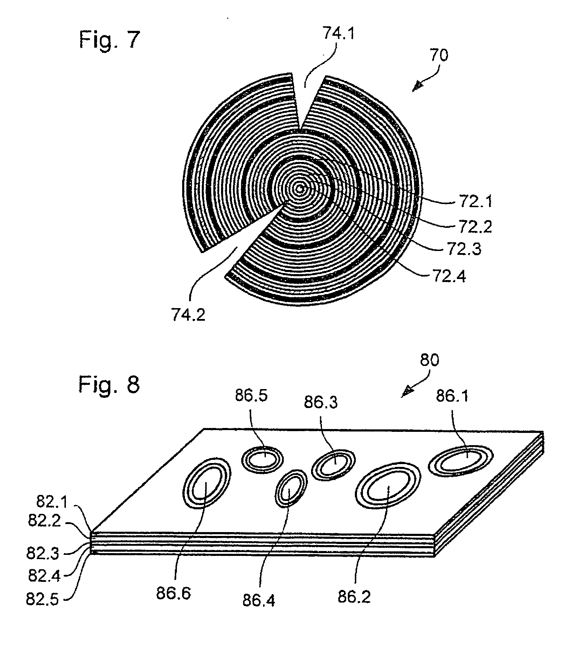

In Fig. 7 ist eine weitere Ausführungsform eines Verbundkörpers 70 gezeigt. Der Verbundkörper 70 ist dabei aus einem Materialblock aus zylinderförmig konzentrisch umeinander liegenden schichtförmigen Materialstücken abgetrennt und umfasst nun eine Vielzahl ringförmiger Materialstücke 72.1 bis 72.4. Die Materialstücke 72.1 bis 72.4 sind dabei ausgewählte Beispiele von Materialstücken aus der Vielzahl verschiedener Materialstücke des Verbundkörpers 70. Alternativ kann es bevorzugt sein, spiralförmige Materialstücke 72.1 bis 72.4 vorzusehen, wobei ein Zusammenfügen der Materialstücke zu einem Materialblock in diesem Fall leichter möglich ist.

Zu den konzentrisch zueinander angeordneten Materialstücken, die bevorzugt durch Kleber miteinander verbunden sind, enthält der Verbundkörper 70 aus Fig. 7 zwei Ausnehmungen 74.1, 74.2, die radial von einer Umfangseite in Richtung des Zentrums des Verbundkörpers 70 vorstehen. Grundsätzlich lässt sich der Verbundkörper 70 insbesondere auch nach seinem Abtrennen von einem Materialblock wie jede andere Schicht bearbeiten, insbesondere Schneiden, Schärfen oder Spalten. Somit kann der Verbundkörper 70 durch ein Schneiden entlang definierter Konturen als individuelle Gestaltung einer Oberfläche eines Zierteils in einem Kraftfahrzeug eingesetzt und für eine Vielzahl unterschiedlich geformter Oberflächen angepasst werden.

Die vorstehend beschriebenen Figuren zeigen jeweils ausgewählte Beispiele von Verbundkörpern bzw. Materialblöcken, die eine Ausführungsform der Erfindung darstellen. Der Erfindungsgedanke eröffnet jedoch daneben noch eine Vielzahl weiterer möglicher Ausführungsformen, die vielfältige individuelle Designs ermöglicht. Fig. 8 stellt darüber hinaus einen Materialblock 80 dar, der insgesamt einem Bearbeitungsprozess, insbesondere einem Schärfspalten unterworfen wurde. Aus dem Materialblock 80, der eine Mehrzahl von Materialstücken 82.1 bis 82.5 aufweist, sind einzelne Verbundkörper abgetrennt. Der verbleibende Materialblock 80 weist beispielsweise an den Stellen, an denen Stücke des Materialblocks 80 abgetrennt wurden, Ausnehmungen 86.1 bis 86.6 auf. Diese Struktur wird auch als "hinterlegte Ornamentik/Strukturen" bezeichnet.

Der in Fig. 8 gezeigte Materialblock 80 bildet insofem ebenfalls einen erfindungsgemäßen Verbundkörper, der zur Verwendung als Zierteil mit einer sichtbaren Oberfläche in einem Kraftfahrzeug eingerichtet ist. Die Ausnehmungen 86.1 bis 86.6 stellen einerseits eine effizient realisierte individuelle Bearbeitung der Oberfläche des Zierteils dar, indem Konturen beim Schärfspalten individuell variiert werden. Andererseits ist es möglich, dass beispielsweise durch die Ausnehmungen 86.1 bis 86.6 jeweils oder teilweise Fingerführungen oder dergleichen für innerhalb der Ausnehmungen 86.1 bis 86.6 vorhandener Betätigungselemente, beispielsweise Drucktaster oder dergleichen vorgesehen sind. In dem Materialblock 80 können insbesondere im Bereich der Ausnehmungen 86.1 bis 86.6 drucksensitive Elemente vorhanden sein, die eine funktionale Wirkung der Ausnehmungen 86.1 bis 86.6 in dem Verbundkörper realisieren.

In der in Fig. 8 gezeigten Ausführungsform lässt sich zwischen eingearbeiteter Hinterlegung und wieder verwendbarer Hinterlegung unterscheiden. Bei der eingearbeiteten Hinterlegung verbleiben Noppen oder eine Konturschablone im Teil, wogegen bei der wieder verwendbaren Hinterlegung entsprechende Elemente wieder verwendet werden.

Je nach Materialart und Form der Einlegematerialien, beispielsweise Materialdichte, Dimension des Einlegebauteils oder andere Materialeigenschaften, ergibt sich eine davon abhängige Topographie. Es können dabei insbesondere Gummi, Elastomere, Polymere, TPU, TPE, PVC, Leder, Naturfasermaterialien, Mehrschichtenleder, Holz, Kork, Metall, Textilien, chitinhaltige Werkstoffe (z.B. Muscheln, Schildkrötengehäuse), Zellulose oder Papier verwendet werden.

Bei einer lichttransparenten Hinterlegung wird ein Leuchtmittel oder ein Schalter hinterlegt. Das Leuchtmittel oder der Schalter kann flächig, konturiert oder eine Noppe sein, wobei das Leuchtmittel beispielsweise durch LED, OLED, Leuchtfolie EL-Lack usw. gebildet werden kann. Das Leuchtmittel kann auch mehrschichtig aufgebaut sein, wobei insbesondere eine obere Verschleißschicht vorgesehen sein kann, die für Licht transparent ist. Die Verschleißschicht kann in diesem Fall abgetragen werden, ohne dass das Leuchtmittel in seiner Funktion beeinträchtigt oder gar beschädigt wird. Eine entsprechende Verschleißschicht kann auch an einem Schalter, der beispielsweise durch einen Piezoschalter, einen elektromagnetischen Schalter etc. gebildet wird, vorgesehen sein.

Insbesondere auch lichttransparente Schichten können farbig sein. Daneben können sie flächig, konturiert oder mit Noppen versehen sein. Eine farbige lichttransparente Schicht kann auch beispielsweise durch eine transparente Schicht mit einer Farbschicht (z.B. Folie, Lack, Bedruckung) erzeugt werden. Die Farbschicht kann dabei lichttransparent oder Licht streuend sein, vollflächig oder nur teilweise vorliegen.

Es können auch lichttransparente oder Licht absorbierende Materialien als Hinterlegungsmaterialien verwendet werden. Licht absorbierende Materialien eignen sich dabei dazu, aus einstrahlender Lichtenergie elektrische Energie zu gewinnen.

Wie bei einem Materialblock gemäß einer anderen Ausführungsform können ein aus einem Omamentik-"Mutterblock" bevorzugt mehrere unterschiedliche hinterlegte Omamentik-Abtrennungsschichten, also auch Verbundkörper, erzeugt werden. Daneben kann ein Verbundkörper auch nur aus zumindest zwei Schichten bestehen. Eine nachfolgende Abtrennung weiterer Schichten erfolgt vorzugsweise nicht, auch wenn dies natürlich möglich und in bestimmten Situationen auch zu bevorzugen ist.

Es können auch Flächeneinlagerungen als Durchscheinoptik verwendet werden. Solche Flächeneinlagerungen können in den Materialblock eingearbeitet werden oder auch im Sinne einer Schablone zur Bearbeitung des Materialblocks verwendet und anschließend wieder entfernt werden.

Somit können einerseits klassische Intarsien erzeugt werden, indem in einem Verbundkörper und/oder Materialblock ein Ausschnitt erzeugt wird, in den ein passendes Einlegeteil aus einem beliebigen Material eingelegt wird. Andererseits können auch Intarsienähnliche Effekte, sogenannte "undefinierte Intarsien" durch gezielte Schichtung von Materialien und ein anschließendes Beschneiden erzeugt werden.

Als eine weitere Ausführungsform lassen sich "Säulen", die einen definierten oder zufälligen Querschnitt haben, herstellen. Die Säulen können durch formgebende Verfahren, Gießen, Schäumen, Extrusion, Pressverfahren oder durch mechanische Bearbeitung wie Fräsen und Schleifen erzeugt werden.

Die Säulen können durch "Mehrschichtleder" wie z.B. einen Verbundkörper aufgebaut sein. Dies kann durch ein Aufschichten und Aufrollen mehrerer Schichten von Leder oder einem anderen flexiblen Dekormaterial geschehen. Bei dem Aufrollen kann auch ein Kernteil mit einem gewählten Querschnitt, der den Aufrollaußenquerschnitt vorgibt, verwendet werden.

Bei der Säulenherstellung wird bevorzugt bei den formgebenden Verfahren Gießen, Schäumen, Extrusion, Pressverfahren ein Polymer (PUR, Harz etc.) oder Polymer-Faser oder -Pulver Gemisch verwendet. Die Faser oder das Pulver kann beispielsweise aus einem Holz, Zellulose, Papier, Naturfaser, Lederpulverfaser, Kork, textiler Faser oder auch Vlies bestehen.

Die Säulen können Formkörper mit variierendem Querschnitt, Vollprofile oder Hohlprofile sein. Dabei kann auch in den Säulen transparentes oder Licht leitendes Material, beispielsweise in Form einer weiteren Säule oder in Form von "Füllstoffen" eingelassen sein.

Die Säulen können dann beispielsweise in einen Materialblock und/oder Verbundkörper eingelegt, in einen Materialblock eingeschoben, eingesteckt oder eingepresst werden, wobei der Materialblock einerseits gemäß der vorstehenden Erfindung erzeugt sein oder auch aus Holz, Polymer, einem Füllstoff und dergleichen bestehen kann. Daneben kann auch ein Materialblock durch Zusammenfügen einer Mehrzahl von Säulen hergestellt werden. Der Materialblock kann dann beispielsweise durch Formschluss ("Puzzie-Effekt") oder Stoffschluss oder eine Kombination davon zusammengefügt sein.

Bevorzugt sind die Materialstücke des Materialblocks in ihrer Farbe voneinander unterschiedlich. Daneben ist es jedoch auch möglich, dass einzelne Materialstücke alternativ und zusätzlich in ihrer Struktur, ihrem Material, ihrer Formgebung usw. voneinander unterschiedlich sein können.

Die Materialstücke können z.B. über Holtmelt- oder Dispersionsklebstoffe miteinander verklebt werden. Alternativ ist es jedoch auch möglich, andere Klebstoffe zu verwenden.

Bevorzugt wird ein Verbundkörper nach dem Aufbringen auf die sichtbare Oberfläche des Zierteils, alternativ auch davor, versiegelt. Hierfür eignen sich einerseits ein Sprüh- oder Gießverfahren, andererseits kann auch eine Folie, beispielsweise mittels eines Thermoformverfahrens, auf den Verbundkörper aufgebracht werden. Die Versiegelung kann entweder sichtseitig erfolgen, um das fertige Zierteil vor äußeren Einflüssen wie Bestrahlung, Schmutz oder Feuchtigkeit zu schützen oder um zusätzliche optische Effekte (z.B. Darstellung einer Narbung in der Versiegelungsschicht) zu erzeugen. Alternativ kann eine rückseitige Versiegelung aufgebracht sein, die z.B. der Verstärkung des Verbundkörpers dient und eine bessere Verarbeitbarkeit gewährleistet. Denkbar ist natürlich auch, sowohl eine sichtseftige als auch eine rückseitige Versiegelung vorzusehen.

Neben dem Verkleben können Materialstücke, die Lederschichten sind, zur Verfestigung auch hinterfüllt oder hinterpresst, vorzugsweise mit einem Polymer versehen werden. Je dicker Leder ist, desto loser wird die Lederstruktur an der Schlechtseite, also der hochwertigen Oberfläche gegenüberliegenden Seite. Ein Hinterfüllen oder Hinterpressen zur Verfestigung wird also für Lederstrukturen umso interessanter, je dicker sie werden.

Für den Materialblock ergeben sich Dicken von 0,3 mm bis 1,0 m, bevorzugt im Bereich von 0,4 mm bis 0,5 m, wobei die Dicken-Richtung im Falle von zusammengefügten flächigen Schichtelementen aus Leder im Wesentlichen senkrecht zu der lateralen Ausdehnung der Lederschichten verläuft. Der Verbundkörper kann auch mit einem transparenten Polymer beschichtet sein, die Oberfläche kann auch geprägt sein.

Neben dem Schärfen und Schärfspalten sind auch Spalten, Schleifen, Sägen, Fräsen, Pressen, Prägen, Lasem, Schneiden, Polieren, chemisches Abtragen und allgemeine Veredelungsprozesse möglich. Mit der Bearbeitung des Leders ist das Abtragen von Material einer einzelnen Schicht oder die Bearbeitung des Mehrschicht-Materialblocks gemeint.

Durch die Bearbeitung des Materialblocks können zweidimensional oder dreidimensional strukturierte Teile erzeugt werden. Ein zweidimensional strukturiertes Teil entsteht beispielsweise bei einem Abtrennen eines Verbundkörpers von dem Materialblock aus Fig. 1 entlang der Schnittebene 14. Der entstehende Verbundkörper 20 ist in Fig. 2 gezeigt. Eine dreidimensional strukturierte Form eines Verbundkörpers entsteht beispielsweise bei einem Schnitt durch den Materialblock 40 aus Fig. 4 entlang der Schnittlinien 46 und 48.

Es können neben einzelnen Schichten auch ganze Blöcke aus dem Materialblock ausgeschnitten werden, so dass der Verbundkörper nicht zwangsläufig im Wesentlichen zweidimensional ausgedehnt sein muss.

## Patentansprüche

1. Verfahren zum Herstellen eines ein flexibles Dekormaterial umfassenden Körpers, zur Verwendung als Zierteil mit einer sichtbaren Oberfläche in einem Kraftfahrzeug umfassend die folgenden Schritte:
Zusammenfügen, insbesondere Verkleben einer Mehrzahl von unterschiedlichen Materialstücken (12.1-12.8, 32.1-32.8, 42.1-42.8, 52.1-52.8, 62, 82.1-82.5), wobei zumindest eines der Materialstücke in seiner Dicke variiert, zu einem Materialblock (10, 30, 40, 50, 60, 80) und
Abtrennen eines oder mehrerer Verbundkörper (20, 70) von dem Materialblock (10, 30, 40, 50, 60, 80),
so dass der abgetrennte Verbundkörper (20, 70) mehrere der Materialstücke (22.1-22.8, 72.1-72.4) enthält, und
Aufbringen des abgetrennten Verbundkörpers (20, 70) auf einen Träger zur Bildung einer sichtbaren Oberfläche eines Zierteils, wobei die Materialstücke (22.1-22.8, 72.1-72.4) entlang der Oberfläche nebeneinander angeordnet sind.

2. Verfahren nach Anspruch 1, wobei das flexible Dekormaterial Leder ist.

3. Verfahren nach Anspruch 1 oder 2, wobei die Materialstücke (12.1-12.8, 32.1-32.8, 42.1-42.8, 52.1-52.8, 62, 82.1-82.5) vor dem Zusammenfügen in eine definierte oder zufällige Form gebracht, bevorzugt geschärft, gespalten, schärfgespalten, geschliffen oder gebogen werden.

4. Verfahren nach einem der vorstehenden Ansprüche, wobei die Materialstücke (12.1-12.8, 32.1-32.8, 42.1-42.8, 52.1-52.8, 62, 82.1-82.5) flächige Schichten einer Dicke von zwischen 0,15 mm und 10,0 mm, bevorzugt zwischen 0,4 mm und 1,4 mm aufweisen.

5. Verfahren nach einem der vorstehenden Ansprüche, wobei die Materialstücke (12.1-12.8, 32.1-32.8, 42.1-42.8, 52.1-52.8, 62, 82.1-82.5) flächig aufeinander zusammengefügt werden.

6. Verfahren nach einem der vorstehenden Ansprüche, wobei die Materialstücke (12.1-12.8, 32.1-32.8, 42.1-42.8, 52.1-52.8, 62, 82.1-82.5) in drei Dimensionen zufällig geformt sind.

7. Verfahren nach einem der vorstehenden Ansprüche, wobei die Materialstücke (12.1-12.8, 32.1-32.8, 42.1-42.8, 52.1-52.8, 62, 82.1-82.5) zumindest bereichsweise voneinander verschiedene Formen, insbesondere verschiedene Dicken aufweisen.

8. Verfahren nach einem der vorstehenden Ansprüche, wobei die Materialstücke Funktionsstücke (54.1-54.5), insbesondere Funktionsschichten umfassen, die zwischen benachbarte Materialstücke (52.1-52.8) gefügt werden.

9. Verfahren nach einem der vorstehenden Ansprüche, wobei die Materialstücke (12.1-12.8, 32.1-32.8, 42.1-42.8, 52.1-52.8, 62, 82.1-82.5) durch einen Klebstoff, insbesondere ein Polymer zusammengefügt werden.

10. Verfahren nach einem der vorstehenden Ansprüche, wobei durch das Zusammenfügen ein im Wesentlichen quaderförmiger oder zylinderförmiger Materialblock (10, 30, 40, 50, 60, 80) erzeugt wird.

11. Verfahren nach einem der vorstehenden Ansprüche, wobei das Abtrennen eines oder mehrerer Verbundkörper (20, 70) durch Schneiden entlang einer Fläche (14,16, 34, 36, 46, 48), die mehrere der Materialstücke (12.1-12.8, 32.1-32.8, 42.1-42.8, 52.1-52.8, 62, 82.1-82.5) schneidet, durchgeführt wird.

12. Verfahren nach Anspruch 11, wobei die Ausrichtung der Fläche (14, 16, 34, 36, 46, 48), entlang welcher abgetrennt wird, zufällig ausgewählt wird.

13. Dekorelement eines Fahrzeugteils mit einer sichtbaren Oberfläche und einer Mehrzahl von zusammengefügten, bevorzugt miteinander verklebten, entlang der Oberfläche nebeneinander angeordneten, unterschiedlichen Materialstücken (12.1-12.8, 22.1-22.8, 32.1-32.8, 42.1-42.8, 52.1-52.8, 62, 82.1-82.5), die ein flexibles Dekormaterial umfassen, wobei zumindest eines der Materialstücke in seiner Dicke variiert.

14. Dekorelement nach Anspruch 13, wobei das flexible Dekormaterial Leder ist.

15. Dekorelement nach Anspruch 13 oder 14, wobei die Materialstücke (12.1-12.8, 22.1-22.8, 32.1-32.8, 42.1-42.8, 52.1-52.8, 62, 82.1-82.5) Streifen einer Dicke von zwischen 0,15 mm und 10,0 mm, bevorzugt zwischen 0,4 mm und 1,4 mm aufweisen.

16. Dekorelement nach einem der Ansprüche 13 bis 15, wobei die Materialstücke Funktionsstücke (54.1-54.5), insbesondere Funktionsstreifen umfassen, die zwischen benachbarten Materialstücken (52.1-52.8) angeordnet sind.

17. Dekorelement nach einem der Ansprüche 13 bis 16, wobei die Materialstücke (12.1-12.8, 22.1-22.8, 32.1-32.8, 42.1-42.8, 52.1-52.8, 62, 82.1-82.5) durch einen Klebstoff, insbesondere ein Polymer zusammengefügt sind.

18. Dekorelement nach einem der Ansprüche 13 bis 17, das nach dem Verfahren nach einem der Ansprüche 1 bis 12 hergestellt ist.

## Claims

1. Method for producing a body comprising a flexible decorative material for use as a trim part having a visible surface in a motor vehicle, comprising the following steps:
joining together, in particular bonding, a plurality of different material pieces (12.1-12.8, 32.1-32.8, 42.1-42.8, 52.1-52.8, 62, 82.1-82.5), wherein at least one of the material pieces varies in its thickness, to form a material block (10, 30, 40, 50, 60, 80) and
separating off one or more composite bodies (20, 70) from the material block (10, 30, 40, 50, 60, 80), so that the separated composite body (20, 70) contains several of the material pieces (22.1-22.8; 72.1-72.4), and
applying the separated composite body (20, 70) to a base to form a visible surface of a trim part, wherein the material pieces (22.1-22.8, 72.1-72.4) are arranged next to one another along the surface.

2. Method according to claim 1, wherein the flexible decorative material is leather.

3. Method according to claim 1 or 2, wherein the material pieces (12.1-12.8, 32.1-32.8, 42.1-42.8, 52.1-52.8, 62, 82.1-82.5) before joining together are given a defined or random shape, preferably skived, split, skive-split, ground or bent.

4. Method according to one of the preceding claims, wherein the material pieces (12.1-12.8, 32.1-32.8, 42.1-42.8, 52.1-52.8, 62, 82.1-82.5) have flat layers of a thickness of between 0.15 mm and 10.0 mm, preferably between 0.4 mm and 1.4 mm.

5. Method according to one of the preceding claims, wherein the material pieces (12.1-12.8, 32.1-32.8, 42.1-42.8, 52.1-52.8, 62, 82.1-82.5) are joined flatly to one another.

6. Method according to one of the preceding claims, wherein the material pieces (12.1-12.8, 32.1-32.8, 42.1-42.8, 52.1-52.8, 62, 82.1-82.5) are randomly shaped in three dimensions.

7. Method according to one of the preceding claims, wherein the material pieces (12.1-12.8, 32.1-32.8, 42.1-42.8, 52.1-52.8, 62, 82.1-82.5) have at least in some regions shapes which are different from one another, in particular different thicknesses.

8. Method according to one of the preceding claims, wherein the material pieces comprise functional pieces (54.1-54.5), in particular functional layers, which are joined between adjacent material pieces (52.1-52.8).

9. Method according to one of the preceding claims, wherein the material pieces (12.1-12.8, 32.1-32.8, 42.1-42.8, 52.1-52.8, 62, 82.1-82.5) are joined together by an adhesive, in particular a polymer.

10. Method according to one of the preceding claims, wherein an essentially rectangular or cylindrical material block (10, 30, 40, 50, 60, 80) is generated by the joining together.

11. Method according to one of the preceding claims, wherein the separating of one or more composite bodies (20, 70) is carried out by cutting along a surface (14, 16, 34, 36, 46, 48) which intersects several of the material pieces (12.1-12.8, 32.1-32.8, 42.1-42.8, 52.1-52.8, 62, 82.1-82.5).

12. Method according to claim 11, wherein the alignment of the surface (14, 16, 34, 36, 46, 48) along which separating is effected, is selected randomly.

13. Decorative element of a vehicle part having a visible surface and a plurality of different material pieces (12.1-12.8, 22.1-22.8, 32.1-32.8, 42.1-42.8, 52.1-52.8, 62, 82.1-82.5) which are joined together, preferably bonded to one another, arranged next to one another along the surface and which comprises a flexible decorative material, wherein at least one of the material pieces varies in its thickness.

14. Decorative element according to claim 13, wherein the flexible decorative material is leather.

15. Decorative element according to claim 13 or 14, wherein the material pieces (12.1-12.8, 22.1-22.8, 32.1-32.8, 42.1-42.8, 52.1-52.8, 62, 82.1-82.5) have strips of a thickness from between 0.15 mm and 10.0 mm, preferably between 0.4 mm and 1.4 mm.

16. Decorative element according to one of claims 13 to 15, wherein the material pieces comprise functional pieces (54.1-54.5), in particular functional strips, which are arranged between adjacent material pieces (52.1-52.8).

17. Decorative element according to one of claims 13 to 16, wherein the material pieces (12.1-12.8, 22.1-22.8, 32.1-32.8, 42.1-42.8, 52.1-52.8, 62, 82.1-82.5) are joined together by an adhesive, in particular a polymer.

18. Decorative element according to one of claims 13 to 17, which is produced by the method according to one of claims 1 to 12.

## Revendications

1. Procédé pour la fabrication d'un corps comprenant un matériau de décoration flexible pour l'utilisation en tant qu'élément décoratif avec une surface visible dans un véhicule automobile, comprenant les étapes suivantes :
assembler, en particulier coller une pluralité de différentes pièces de matériau (12.1-12.8, 32.1-32.8, 42.1-42.8, 52.1-52.8, 62, 82.1-82.5), au moins l'une de ces pièces de matériau variant concernant son épaisseur, pour donner un bloc de matériau (10, 30, 40, 50, 60, 80) et
séparer un ou plusieurs corps composites (20, 70) du bloc de matériau (10, 30, 40, 50, 60, 80), de sorte que le corps composite (20, 70) séparé contienne plusieurs des pièces de matériau (22.1-22.8, 72.1-72.4) et
appliquer le corps composite séparé (20, 70) sur un support pour la formation d'une surface visible d'un élément décoratif, les pièces de matériau (22.1-22.8, 72.1-72.4) étant disposées les unes à côté des autres le long de la surface.

2. Procédé selon la revendication 1, dans lequel le matériau de décoration flexible est du cuir.

3. Procédé selon les revendications 1 ou 2, dans lequel les pièces de matériau (12.1-12.8, 32.1-32.8, 42.1-42.8, 52.1-52.8, 62, 82.1-82.5) sont réalisées avec une forme définie ou aléatoire avant l'assemblage, de préférence meulées, refendues, refendues par meulage, poncées ou cintrées.

4. Procédé selon l'une des revendications précédentes, dans lequel les pièces de matériau (12.1-12.8, 32.1-32.8, 42.1-42.8, 52.1-52.8, 62, 82.1-82.5) présentent des couches plates d'une épaisseur comprise entre 0,15 mm et 10,0 mm, de préférence entre 0,4 mm et 1,4 mm.

5. Procédé selon l'une des revendications précédentes, dans lequel les pièces de matériau (12.1-12.8, 32.1-32.8, 42.1-42.8, 52.1-52.8, 62, 82.1-82.5) sont assemblées à plat les unes sur les autres.

6. Procédé selon l'une des revendications précédentes, dans lequel les pièces de matériau (12.1-12.8, 32.1-32.8, 42.1-42.8, 52.1-52.8, 62, 82.1-82.5) sont formées aléatoirement en trois dimensions.

7. Procédé selon l'une des revendications précédentes, dans lequel les pièces de matériau (12.1-12.8, 32.1-32.8, 42.1-42.8, 52.1-52.8, 62, 82.1-82.5) présentent, au moins par endroits, des formes différentes les unes des autres, en particulier des épaisseurs différentes.

8. Procédé selon l'une des revendications précédentes, dans lequel les pièces de matériau comprennent des pièces fonctionnelles (54.1-54.5), en particulier des couches fonctionnelles, lesquelles sont insérées entre des pièces de matériau (52.1-52.8) voisines.

9. Procédé selon l'une des revendications précédentes, dans lequel les pièces de matériau (12.1-12.8, 32.1-32.8, 42.1-42.8, 52.1-52.8, 62, 82.1-82.5) sont assemblées grâce à un adhésif, en particulier un polymère.

10. Procédé selon l'une des revendications précédentes, dans lequel, grâce à l'assemblage, on génère un bloc de matériau (10, 30, 40, 50, 60, 80) sensiblement en forme de parallélépipède ou en forme de cylindre.

11. Procédé selon l'une des revendications précédentes, dans lequel le sectionnement d'un ou plusieurs corps composite (20, 70) est réalisé par découpage le long d'une surface (14, 16, 34, 36, 46, 48) qui coupe plusieurs des pièces de matériau (12.1-12.8, 32.1-32.8, 42.1-42.8, 52.1-52.8, 62, 82.1-82.5).

12. Procédé selon la revendication 11, dans lequel l'orientation de la surface (14, 16, 34, 36, 46, 48) le long de laquelle on effectue la séparation est choisie de manière aléatoire.

13. Elément de décoration d'une pièce de véhicule avec une surface visible et une pluralité de différentes pièces de matériau (12.1-12.8, 22.1-22.8, 32.1-32.8, 42.1-42.8, 52.1-52.8, 62, 82.1-82.5) assemblées, de préférences collées ensemble, disposées les unes à côté des autres le long de la surface, lesquelles comprennent un matériau de décoration flexible, au moins l'une des pièces de matériau variant concernant son épaisseur.

14. Elément de décoration selon la revendication 13, dans lequel le matériau de décoration flexible est du cuir.

15. Elément de décoration selon les revendications 13 ou 14, dans lequel les pièces de matériau (12.1-12.8, 222.1-22.8, 32.1-32.8, 42.1-42.8, 52.1-52.8, 62, 82.1-82.5) présentent des bandes d'une épaisseur comprise entre 0,15 mm et 10,0 mm, de préférence entre 0,4 mm et 1,4 mm.

16. Elément de décoration selon l'une des revendications 13 à 15, dans lequel les pièces de matériau comprennent des pièces fonctionnelles (54.1-54.5), en particulier des bandes fonctionnelles, lesquelles sont disposées entre des pièces de matériau (52.1-52.8) voisines.

17. Elément de décoration selon l'une des revendications 13 à 16, dans lequel les pièces de matériau (12.1-12.8, 22.1-22.8, 32.1-32.8, 42.1-42.8, 52.1-52.8, 62, 82.1-82.5) sont assemblées par un adhésif, en particulier un polymère.

18. Elément de décoration selon l'une des revendications 13 à 17, lequel est fabriqué selon le procédé de l'une des revendications 1 à 12.
